# EUROPEAN PATENT APPLICATION

(11) **EP 4 614 582 A1**
(43) Date of publication of application: **10.09.2025**
(21) Application number: 24859931.8
(22) Date of filing: 29.08.2024
(51) Int. Cl.: H01M 4/13, H01M 4/139, H01M 4/62

(54) **MIXTURE SHEET FOR ELECTROCHEMICAL DEVICES, ELECTROCHEMICAL DEVICE, AND METHOD FOR PRODUCING MIXTURE SHEET FOR ELECTROCHEMICAL DEVICES**

(30) Priority: 31.08.2023 JP 2023141316
(71) Applicant: Daikin Industries, Ltd., Osaka-shi, Osaka 530-0001 (JP)
(72) Inventor: HIRAGA, Kentaro, Osaka-Shi, Osaka 530-0001 (JP); SHIMIZU, Yuto, Osaka-Shi, Osaka 530-0001 (JP); YAMADA, Takaya, Osaka-Shi, Osaka 530-0001 (JP)
(74) Representative: Hoffmann Eitle
(86) International application number: PCT/JP2024/031050
(87) International publication number: WO 2025/047906

(57) **Abstract**

The disclosure aims to provide an electrochemical device mixture sheet capable of improving the sheet strength while maintaining good electrochemical characteristics, an electrochemical device, and a method for producing an electrochemical device mixture sheet. The disclosure relates to an electrochemical device mixture sheet including: a silicone compound that is liquid at 25°C; a binder; and an electrochemical device material, the silicone compound being contained in an amount of 0.5 to 20% by mass relative to a solid content of the electrochemical device mixture sheet, the silicone compound having a kinematic viscosity at 25°C of 5 cSt to 60000 cSt.

## Description

### TECHNICAL FIELD

The disclosure relates to electrochemical device mixture sheets, electrochemical devices, and methods for producing electrochemical device mixture sheets.

### BACKGROUND ART

Current electric appliances demonstrate a tendency to have a reduced weight and a smaller size, which leads to development of electrochemical devices such as lithium-ion secondary batteries having a high energy density.

As techniques related to electrochemical devices, Patent Literature 1 discloses an electrode for secondary battery including a powdered active material, a conductive material, and a fluorine-containing polymer resin, and Patent Literature 2 discloses a free-standing solid composite electrolyte film produced using solid ion-conductive inorganic particles and a tetrafluoroethylene (co)polymer. Patent Literature 3 discloses a solid electrolyte slurry and an electrode slurry each containing an inorganic solid electrolyte material and a liquid that is inert to the inorganic solid electrolyte material.

### CITATION LIST

### - Patent Literature

Patent Literature 1: JP 2007-026984 A
Patent Literature 2: JP 2022-546129 T
Patent Literature 3: JP 2016-062709 A

### SUMMARY OF INVENTION

### - Technical Problem

When an electrochemical device mixture sheet is produced using the slurry disclosed in Patent Literature 3, a large-area sheet is advantageously obtainable. However, the sheet strength required during sheet handling (e.g., transport) in the production process tends to be difficult to achieve. The sheet strength required in the production process can be achieved by increasing the amount of binder. However, an increased amount of binder tends to lower the electrochemical characteristics such as discharge capacity. Thus, electrochemical device mixture sheets having a good balance between the electrochemical characteristics and the sheet strength have been difficult to obtain by conventional methods.

The disclosure aims to provide an electrochemical device mixture sheet capable of improving the sheet strength while maintaining good electrochemical characteristics, an electrochemical device, and a method for producing an electrochemical device mixture sheet.

### - Solution to Problem

The disclosure (1) relates to an electrochemical device mixture sheet including: a silicone compound that is liquid at 25°C; a binder; and an electrochemical device material, the silicone compound being contained in an amount of 0.5 to 20% by mass relative to a solid content of the electrochemical device mixture sheet, the silicone compound having a kinematic viscosity at 25°C of 5 cSt to 60000 cSt.

The disclosure (2) relates to the electrochemical device mixture sheet according to the disclosure (1), wherein the silicone compound has a polyoxyalkylene chain.

The disclosure (3) relates to the electrochemical device mixture sheet according to the disclosure (1) or (2), wherein the silicone compound is contained in an amount of 0.5 to 15% by mass relative to the solid content of the electrochemical device mixture sheet.

The disclosure (4) relates to an electrochemical device mixture sheet including: a silicone compound that is liquid at 25°C; a binder; and an electrochemical device material, the silicone compound having a polyoxyalkylene chain.

The disclosure (5) relates to the electrochemical device mixture sheet according to any one of the disclosures (1) to (4), wherein the silicone compound has a saturated moisture content at 25°C of greater than 30 ppm.

The disclosure (6) relates to the electrochemical device mixture sheet according to any one of the disclosures (1) to (5), wherein the silicone compound has a mass reduction rate of 20% by mass or less when heated at 150°C for 24 hours.

The disclosure (7) relates to the electrochemical device mixture sheet according to any one of the disclosures (1) to (6), wherein the binder is contained in an amount of 0.5 to 10% by mass relative to the solid content of the electrochemical device mixture sheet.

The disclosure (8) relates to the electrochemical device mixture sheet according to any one of the disclosures (1) to (7), including a metal salt.

The disclosure (9) relates to the electrochemical device mixture sheet according to the disclosure (8), wherein the metal salt is contained in an amount of 0.1 to 30% by mass relative to the silicone compound.

The disclosure (10) relates to the electrochemical device mixture sheet according to any one of the disclosures (1) to (9), wherein the electrochemical device mixture sheet is an electrode mixture sheet or an electrolyte mixture sheet.

The disclosure (11) relates to the electrochemical device mixture sheet according to any one of the disclosures (1) to (10), wherein the binder is a fluorine polymer material.

The disclosure (12) relates to the electrochemical device mixture sheet according to the disclosure (11), wherein the binder includes at least one selected from the group consisting of polytetrafluoroethylene, poly(vinylidene fluoride-co-hexafluoropropylene), and poly(vinylidene fluoride-co-2,3,3,3-tetrafluoropropylene).

The disclosure (13) relates to the electrochemical device mixture sheet according to the disclosure (12), wherein the binder includes polytetrafluoroethylene.

The disclosure (14) relates to the electrochemical device mixture sheet according to any one of the disclosures (1) to (13), including a conductive aid.

The disclosure (15) relates to an electrochemical device including the electrochemical device mixture sheet according to any one of the disclosures (1) to (14).

The disclosure (16) relates to a method for producing an electrochemical device mixture sheet, the method including: a step (1) of mixing a silicone compound that is liquid at 25°C, a binder, and an electrochemical device material to prepare an electrochemical device mixture; and a step (2) of rolling the electrochemical device mixture obtained in the step (1) into a sheet.

The disclosure (17) relates to the production method according to the disclosure (16), wherein the silicone compound has a kinematic viscosity at 25°C of 5 cSt to 60000 cSt, the silicone compound has a polyoxyalkylene chain, and the binder includes polytetrafluoroethylene.

### - Advantageous Effects of Invention

The disclosure can provide an electrochemical device mixture sheet capable of improving the sheet strength while maintaining good electrochemical characteristics, an electrochemical device, and a method for producing an electrochemical device mixture sheet.

### DESCRIPTION OF EMBODIMENTS

The disclosure will be specifically described hereinbelow.

### <Electrochemical device mixture sheet>

The first disclosure relates to an electrochemical device mixture sheet including: a silicone compound that is liquid at 25°C; a binder; and an electrochemical device material, the silicone compound being contained in an amount of 0.5 to 20% by mass relative to a solid content of the electrochemical device mixture sheet, the silicone compound having a kinematic viscosity at 25°C of 5 cSt to 60000 cSt.

The electrochemical device mixture sheet of the first disclosure, with the above configuration, can improve the strength of an electrode sheet or a solid electrolyte sheet while maintaining good electrochemical characteristics. The silicone compound imparts fluidity to the electrochemical device material during sheet formation. This is believed to contribute to uniform sheet formation. When the binder contains a fibrillatable resin, in particular, flow deformation during the sheet formation facilitates the production of fibrils, improving the strength. Imparting fluidity to the electrochemical device material by the silicone compound during the sheet formation improves the sheet strength. As a result, the amount of the binder used can be reduced and the energy density of the electrochemical device can be improved.

The silicone compound is liquid at 25°C and has a kinematic viscosity at 25°C of 5 cSt to 60000 cSt.

When the kinematic viscosity is too low, the silicone compound may flow out during pressure molding. In contrast, when the kinematic viscosity is too high, sufficient fluidity cannot be imparted to the electrochemical device material, possibly failing to improve the sheet strength. In order to impart fluidity to the electrochemical device material, the kinematic viscosity is preferably 10 cSt or higher, more preferably 100 sCt or higher, while preferably 20000 cSt or lower, more preferably 10000 cSt or lower.

The kinematic viscosity herein is a value obtained using an Ubbelohde viscometer at 25°C in conformity with ASTM D445-46T.

The silicone compound may be any silicone compound having a siloxane bond. Preferably, the silicone compound is a silicone compound having a polyoxyalkylene chain in addition to a siloxane bond.

Examples of the structural units of the polyoxyalkylene chain include oxyethylene, oxypropylene, and oxybutylene. The ratio of these structural units is not limited.

When the affinity of the silicone compound with water molecules is higher, i.e., when the saturated water content is greater, the polarity of the silicone compound tends to be higher. When the silicone compound is highly polar, the electrochemical characteristics such as discharge capacity tend not to easily decrease. This is presumably because of the ability of ions to move in the silicone compound. From this standpoint, the silicone compound preferably has a saturated moisture content at 25°C of greater than 30 ppm, more preferably 50 ppm or more, still more preferably 100 ppm or more. The upper limit is not limited. In the case of the silicone compound having no polyoxyalkylene chain, the upper limit is normally 1000 ppm or less.

The saturated moisture content herein is determined by the following method.

To the silicone compound is added five times as much water by volume, whereby a mixture is obtained. After stirring, the mixture is allowed to stand still at 25°C for 24 hours. Then, the mixture is centrifuged, whereby an aqueous phase and a concentrated phase of the silicone compound are separated. The saturated moisture content is measured using the concentrated phase by the Karl Fischer titration method. For measurement of the moisture content, a Karl Fischer moisture meter (MKC-610, available from Kyoto Electronics Manufacturing Co., Ltd.) and Aquamicron AX (available from Mitsubishi Chemical Corp.) as a Karl Fischer reagent are used. The sample amount is set to 1 g. Since the silicone compound that has a polyalkylene chain is miscible with water, the saturated moisture content is considered infinite.

When the silicone compound has a large moisture content, the electrochemical device material may be deteriorated by the moisture, which may impair the electrochemical characteristics. For this reason, the silicon compound is preferably dehydrated before use. The dehydration may be performed by any method such as a method including placing a silicone compound in an evaporator and drying the silicone compound at 1.0 × 10² Pa for three to six hours with heating using, for example, an oil bath at 80°C to 150°C.

The moisture content of the silicone compound after the drying is preferably 150 ppm or less, more preferably 100 ppm or less. The lower limit may be, but is not limited to, 0 ppm and is normally 10 ppm or more.

The moisture content herein is determined by the Karl Fischer titration method.

The electrochemical device mixture sheet of the first disclosure may be produced through a process including heating, such as heat molding. However, volatilization of the silicone compound caused by heating may lead to an insufficient improving effect. Volatilization of the silicone compound may also cause bubbles in the sheet, and such a sheet is a defective product. For this reason, the silicon compound is preferably less prone to volatilization. From this standpoint, the silicone compound has a mass reduction rate of preferably 20% by mass or less, more preferably 10% by mass or less, still more preferably 5% by mass or less when heated at 150°C for 24 hours. The lower limit may be, but is not limited to, 0% by mass and is normally 0.5% by mass or more.

The mass reduction rate herein is determined by the following method.

A silicone compound in an amount of 5 g weighed out in an aluminum cup (50 mm in diameter, 12 mm in height) was heated in a hot air circulation oven at 150°C for 24 hours. Based on the mass measured before and after the heating, the mass reduction rate is calculated using the following equation. The sample is taken three times, and this calculation is performed for each sample and the values are averaged.

Mass reduction rate (% by mass) = [(Mass (g) of the silicone compound before heating) - (Mass (g) of the silicone compound after heating)]/(Mass (g) of the silicone compound before heating) × 100

The silicone compound has an ion conductivity of preferably 1.0 × 10⁻⁹ S/cm or higher, more preferably 1.0 × 10⁻⁸ S/cm or higher, still more preferably 1.0 × 10⁻⁷ S/cm or higher upon dissolution of 1% by mass of LiTFSI. The upper limit is preferably, but not limited to, 1.0 × 10⁻³ S/cm or lower.

The ion conductivity is a value obtainable by the measurement at 25°C using SevenCompact S230 available from Mettler Toledo. The measuring device is calibrated in advance using a standard solution of 12.88 mS/cm before use.

In order to impart fluidity to the electrochemical device material, the silicone compound is contained in an amount of 0.5 to 20% by mass relative to the solid content of the electrochemical device mixture sheet. The amount is preferably 1% by mass or more, more preferably 5% by mass or more, while preferably 15% by mass or less, more preferably 10% by mass or less.

The amount is not the amount of the silicone compound added but the amount extracted from the electrochemical device mixture sheet.

The solid content of the electrochemical device mixture sheet herein is a component to which the silicone compound imparts fluidity and which is solid after mixing with the silicone compound. A component **(e.g.,** metal salt) to be dissolved in the silicone compound after the mixing is not included in the solid content. In EXAMPLES described later, an active material, a conductive aid, and a binder are included in the solid content.

A material such as a fluorine polymer material or a non-fluorine polymer material can be used as the binder.

Examples of the non-fluorine polymer material include polyethylene, polypropylene, polyethylene terephthalate, polymethyl methacrylate, aromatic polyamides, chitosan, alginic acid, polyacrylic acid, polyimides, cellulose, and nitro cellulose, styrene-butadiene rubber (SBR), isoprene rubber, butadiene rubber, acrylonitrile-butadiene rubber (NBR), and ethylene-propylene rubber, styrene-butadienestyrene block copolymers and hydrogenated products thereof, ethylene-propylene-diene terpolymers (EPDM), styrene-ethylene-butadiene-styrene copolymers, styrene-isoprene-styrene block copolymers and hydrogenated products thereof, syndiotactic-1,2-polybutadiene, polyvinyl acetate, ethylene-vinyl acetate copolymers, propylene-α-olefin copolymers, and polymer compositions having ion conductivity of alkali metal ions (especially, lithium ions) .

Examples of the fluorine polymer material include polymers in which a fluorine-containing monomer constituting the polymer includes at least one selected from the group consisting of tetrafluoroethylene (TFE), hexafluoropropylene (HFP), vinylidene fluoride (VdF), perfluoroalkyl vinyl ether (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ethers, fluorine-containing monomers represented by the formula (1-1) :

CH₂=CFRf¹

(wherein Rf¹ is a linear or branched C1-C12 fluoroalkyl group), and fluorine-containing monomers represented by the formula (2-1):

CHF=CHRf²

(wherein Rf² is a linear or branched C1-C12 fluoroalkyl group). The polymer may be copolymerized, if necessary, with at least one selected from the group consisting of fluorine-free monomers such as ethylene (Et), propylene (Pr), alkyl vinyl ether, monomers that provide crosslinkable groups (cure site), and reactive emulsifier monomers.

The monomer that provides a crosslinkable group may be any monomer that can provide the polymer with a crosslinking site for forming a crosslink by a crosslinking agent. Examples include CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN.

The reactive emulsifier monomer may be any compound including one or more unsaturated bonds and one or more hydrophilic groups. Examples include

CH₂=CFCF₂OCF(CF₃)CF₂OCF(CF₃)COONH₄,

CH₂=CFCF₂CF(CF₃)OCF₂CF₂COONH₄,

and

CF₂=CFOCF₂CF(CF₃)OCF(CF₃)COONH₄.

One binder may be used alone or two or more binders may be used in any combination at any ratio.

The binder is preferably the fluorine polymer material. In particular, the binder preferably includes at least one selected from the group consisting of polytetrafluoroethylene (PTFE), poly(vinylidene fluoride-co-hexafluoropropylene), and poly(vinylidene fluoride-co-2,3,3,3-tetrafluoropropylene), and more preferably includes PTFE.

Two or more of the fluorine polymer materials may be used in combination as the binder. The binder used is preferably a combination of PTFE and a fluorine polymer material other than PTFE. In particular, preferred is at least one combination selected from the group consisting of a combination of PTFE and poly(vinylidene fluoride-co-hexafluoropropylene) and a combination of PTFE and poly(vinylidene fluoride-co-2,3,3,3-tetrafluoropropylene).

In the case where the binder includes PTFE, the amount of PTFE in the binder is preferably 50% by mass or more, more preferably 75% by mass or more, still more preferably 80% by mass or more, particularly preferably 85% by mass or more. The upper limit of the amount of PTFE in the binder is not limited and may be 100%.

A fibrillatable resin can be used as the binder. The fibrillatable resin is a resin that is easily fibrillated under a shear stress. Examples of the fibrillatable resin include liquid crystal polymers (LCP), cellulose, acrylic resins, ultra high molecular weight polyethylene, and PTFE. PTFE is preferred among these in terms of chemical stability, thermal stability, and processibility.

The PTFE may be either a homopolymer of tetrafluoroethylene (TFE) or a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

In order to achieve improvement in binding force, sheet strength, and flexibility, the PTFE is preferably the modified PTFE.

In order to achieve improvement in binding force, sheet strength, and flexibility, the modified PTFE preferably contains a modifying monomer unit in an amount falling within a range of 0.00001 to 1.0% by mass in all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.80% by mass, more preferably 0.50% by mass, still more preferably 0.40% by mass, further preferably 0.30% by mass.

The modifying monomer unit herein means a moiety that is part of the molecular structure of PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include a perfluoroolefin such as hexafluoropropylene (HFP); a hydrogen-containing fluoroolefin such as trifluoroethylene and vinylidene fluoride (VDF); a perhaloolefin such as chlorotrifluoroethylene (CTFE); a perfluorovinyl ether; a perfluoroallyl ether; a (perfluoroalkyl)ethylene; and ethylene. One modifying monomer may be used alone or two or more modifying monomers may be used in combination.

Examples of the perfluorovinyl ether include, but are not limited to, an unsaturated perfluoro compound represented by the following formula (A):

CF₂=CF-ORff (A)

wherein Rff is a perfluoroorganic group. The term "perfluoro organic group" herein means an organic group in which all hydrogen atoms bonded to any carbon atom are replaced by fluorine atoms. The perfluoro organic group may have an ether oxygen.

Examples of the perfluorovinyl ether include a perfluoro(alkyl vinyl ether) (PAVE) represented by the formula (A) in which Rff is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rff is a C4-C9 perfluoro(alkoxy alkyl) group; those represented by the formula (A) wherein Rff is a group represented by the following formula: 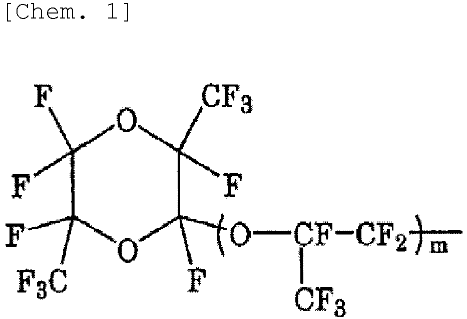 wherein m is an integer of 0 or 1 to 4; and those represented by the formula (A) wherein Rff is a group represented by the following formula: 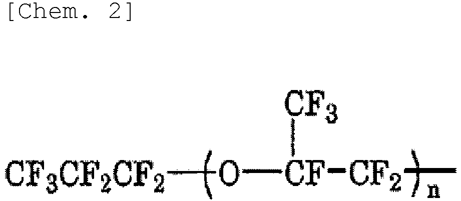 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORff¹ (B)

wherein Rff¹ is a perfluoro organic group.

Rff¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

In order to achieve improvement in expandability, binding force, and flexibility of the mixture sheet, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE.

The PTFE may have a core-shell structure. An example of the PTFE having a core-shell structure is a modified PTFE including a core of high-molecular-weight PTFE and a shell of lower-molecular-weight PTFE or modified PTFE in a particle. Examples of this modified PTFE include PTFEs disclosed in JP 2005-527652 T.

Examples of commercially available PTFEs include F-104, F-106, F-107, F-104C, F-121, F-201, F-205, F-208, and F-302 available from Daikin Industries, Ltd.; 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, and 641J available from The Chemours Company; TF2029, TF2025Z, TF2053Z, TF2073Z, TF2001Z, TF2071USZ, and TF2072Z available from 3M; CD145, CD123, CD126E, CD097, CD084E, CD086EL, CD086EH, CD090E, CD122E, CD141E, and CD127E available from AGC Inc.; and DF681F, DF680F, DF330F, DF291F, DF230F, DF210F, DF132F, DF130F, and DF120F available from Solvay.

For formation of a mixture sheet with better strength, the PTFE preferably has an endothermic peak temperature of 320°C or higher, more preferably 325°C or higher, still more preferably 330°C or higher, further preferably 335°C or higher, further preferably 340°C or higher, further preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on PTFE that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

In order to achieve favorable sheet strength, the amount of the binder relative to the solid content of the electrochemical device mixture sheet is preferably 0.5% by mass or more, more preferably 1% by mass or more, still more preferably 2% by mass or more, while preferably 10% by mass or less, more preferably 8% by mass or less, still more preferably 5% by mass or less.

The amount of the binder is the amount of the binder added in the case where the amount of the binder added during the production of the electrochemical device mixture sheet is known. In the case where the amount of the binder added is not known, the amount of the binder can be calculated by the following method.

If there exists a good solvent for the binder, the good solvent in an amount about 10 times the volume of the pulverized powder of the electrochemical device mixture sheet is added to the pulverized powder, followed by stirring for 24 hours, whereby an extract is obtained. The extract is filtered, and the amount of the binder present in the resulting filtrate is defined as the amount of the binder.

If there does not exist a good solvent for the binder, the amount of residue left after the treatment for dissolving and removing substances other than the binder as described in [0051] in WO 2023/119814 is determined as the amount of the binder.

An electrode active material, for example, can be used as the electrochemical device material. In other words, the electrochemical device mixture sheet of the first disclosure may be an electrode mixture sheet containing an electrode active material.

The electrode material may be a positive electrode active material or a negative electrode active material.

The positive electrode active material may be any material that can electrochemically occlude and release alkali metal ions, and is preferably, for example, a substance containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides, which produce high voltage. Examples of the alkali metal ions include lithium ions, sodium ions, and potassium ions. Preferred are lithium ions.

Examples of the alkali metal-containing transition metal composite oxides include lithium-manganese spinel composite oxides represented by the formula:

MₐMn_{2-b}M¹_{b}O₄

(wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge);
lithium-nickel composite oxides represented by the formula:

   MNi_{1-c}M²_{c}O₂

   (wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge); and
lithium-cobalt composite oxides represented by the formula:

   MCo_{1-d}M³_{d}O₂

   (wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge). In the above formula, M is preferably a metal selected from the group consisting of Li, Na, and K, more preferably Li or Na, still more preferably Li.

In order to achieve high-energy-density, high-output electrochemical devices, preferred among these are MCoO₂, MMnO₂, MNiO₂, MMn₂O₄, MNi_{0.8}Mn_{0.1}Co_{0.1}O₂, MNi_{0.8}Co_{0.15}Al_{0.05}O₂, and MNi_{1/3}Co_{1/3}Mn_{1/3}O₂, and preferred is a compound represented by the following formula. Particularly preferred among these is LiNi_{0.8}Mn_{0.1}Co_{0.1}O₂.

MNiₕCoᵢMnⱼM⁵ₖO₂

In the formula, M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula:

MₑM⁴_{f}(PO₄)_{g}

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li.

The transition metal of the alkali metal-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula:

Li_{y}Ni₁₋ₓMₓO₂

wherein 0.01 ≤ x ≤ 0.7, 0.9 ≤ y ≤ 2.0, and M is a metal atom (other than Li and Ni).

Other examples of the different positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be impaired even when the battery is driven at high voltage.

Other examples of the positive electrode active material also include solid solution materials of M₂MnO₃ and MM⁶O₂ (wherein M is at least one metal selected from the group consisting of Li, Na, and K; and M⁶ is a transition metal such as Co, Ni, Mn, or Fe).

The solid solution material is, for example, an alkali metal manganese oxide represented by the formula Mₓ[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from that of the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

One positive electrode active material may be used alone or two or more thereof having different compositions may be used in any combination at any ratio. Preferred examples of the combination in this case include a combination of LiCoO₂ with a ternary system such as LiNi_{0.33}Co_{0.33}MNn_{0.33}O₂, a combination of LiCoO₂ with either LiMn₂O₄ or one obtained by replacing one or more Mn atoms in LiMn₂O₄ with a different transition metal, and a combination of LiFePO₄ with either LiCoO₂ or one obtained by replacing one or more Co atoms in LiCoO₂ with a different transition metal.

In order to achieve a high electrochemical capacity, the amount of the positive electrode active material is preferably 50 to 90% by mass of the positive electrode mixture. The amount of the positive electrode active material in the positive electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the positive electrode active material in the positive electrode active material layer may lead to an insufficient electrochemical capacity. In contrast, too large an amount thereof may lead to insufficient ion conductivity, insufficient electron conductivity, and insufficient strength of the electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material at least partially containing a carbonaceous material and/or a silicon-containing compound can be particularly suitably used.

A negative electrode active material used in the disclosure suitably contains silicon as a constitutional element. With a negative electrode active material containing silicon as a constitutional element, a high-capacity battery can be produced.

As a material containing silicon, silicon particles, particles having a structure where silicon fine particles are dispersed in a silicon-based compound, silicon oxide particles represented by the formula: SiOₓ (0.5 ≤ x ≤ 1.6), or a mixture of these is/are preferred. The use of any of these can provide a negative electrode mixture for lithium-ion secondary batteries with higher initial charge-discharge efficiency, high capacity, and excellent cycle characteristics.

The term "silicon oxide" herein is a generic term for amorphous silicon oxides. Silicon oxides prior to disproportionation are represented by the formula: SiOₓ (0.5 ≤ x ≤ 1.6) where x preferably satisfies 0.8 ≤ x < 1.6, more preferably 0.8 ≤ x < 1.3. Such a silicon oxide can be obtained, for example, by heating a mixture of silicon dioxide and metallic silicon to generate silicon monoxide gas, followed by cooling and deposition of the silicon monoxide gas.

In order to achieve a high electrochemical capacity, the amount of the negative electrode active material is preferably 50 to 90% by mass of the negative electrode mixture. The amount of the negative electrode active material in the negative electrode active material layer is preferably 60% by mass or more, more preferably 70% by mass or more, particularly preferably 75% by mass or more. The upper limit of the amount is preferably 88% by mass or less, more preferably 86% by mass or less. Too small an amount of the negative electrode active material in the negative electrode active material layer may lead to an insufficient electric capacity. In contrast, too large an amount thereof may lead to insufficient ion conductivity, insufficient electron conductivity, and insufficient strength of the electrode.

The electrochemical device material may be an electrolyte such as a solid electrolyte. In other words, the electrochemical device mixture of the first disclosure may be an electrolyte mixture sheet containing an electrolyte or a solid electrolyte mixture sheet containing a solid electrolyte.

The solid electrolyte may be a sulfide-based solid electrolyte or an oxide-based solid electrolyte. In particular, when a sulfide-based solid electrolyte is used, the electrochemical device mixture is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (X = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof. Preferred among these is Li_{7-x-2y}PS_{6-x-y}Clₓ (0.8 ≤ x ≤ 1.7, 0 < y ≤ -0.25x + 0.5), and particularly preferred is Li₆PS₅Cl.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The amount of the solid electrolyte in the electrochemical device mixture sheet of the first disclosure is preferably 20% by mass or more, more preferably 30% by mass or more, still more preferably 40% by mass or more, while preferably 99% by mass or less, more preferably 90% by mass or less, still more preferably 85% by mass or less.

The electrochemical device mixture sheet of the first disclosure may be an electrode mixture sheet for a solid-state battery containing an electrode active material and a solid electrolyte.

The amount of the electrochemical device material in the electrochemical device mixture sheet of the first disclosure is preferably 70% by mass or more, more preferably 80% by mass or more, still more preferably 90% by mass or more, while preferably 99.5% by mass or less, more preferably 98.5% by mass or less, still more preferably 97.5% by mass or less.

The electrochemical device mixture sheet of the first disclosure may contain a metal salt. The electrochemical device mixture sheet containing a metal salt has good ion conductivity.

The metal salt in the electrochemical device mixture sheet of the first disclosure is preferably in a state of being dissolved in the silicone compound.

The metal salt used may be any metal salt such as an alkali metal salt or an alkaline earth metal salt. One of these may be used alone or two or more thereof may be used in any combination at any ratio. Preferred among these is an alkali metal salt, and more preferred is a lithium salt.

Specific examples of the lithium salt include the following: inorganic lithium salts such as LiPF₆, LiBF₄, LiClO₄, LiAlF₄, LiSbF₆, LiTaF₆, LiWF₇, LiAsF₆, LiAlCl₄, LiI, LiBr, LiCl, LiB₁₀Cl₁₀, Li₂SiF₆, Li₂PFO₃, and LiPO₂F₂;
lithium tungstate salts such as LiWOF₅;
lithium carboxylate salts such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li;
lithium salts containing an S=O group such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, lithium methylsulfate, lithium ethylsulfate (C₂H₅OSO₃Li), and lithium 2,2,2-trifluoroethylsulfate;
lithium imide salts such as lithium bis(trifluoromethanesulfone)imide (LiTFSI), lithium bis(monofluorosulfone)imide (LiFSI) LiN(FCO)₂, LiN (FCO) (FSO₂), LiN (FSO₂)₂, LiN (FSO₂)(CF₃SO₂), LiN(CF₃SO₂)₂, LiN(C₂F₅SO₂)₂, lithium bis-perfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, LiN(CF₃SO₂)(FSO₂), LiN(CF₃SO₂)(C₃F₇SO₂), LiN (CF₃SO₂)(C₄F₉SO₂), and LiN(POF₂)₂;
lithium methide salts such as LiC(FSO₂)₃, LiC(CF₃SO₂)₃, and LiC(C₂F₅SO₂)₃; and
fluorine-containing organic lithium salts such as salts represented by the formula: LiPFₐ(CₙF₂ₙ₊₁)₆₋ₐ (wherein a is an integer of 0 to 5; and n is an integer of 1 to 6) such as LiPF₃(C₂F₅)₃, LiPF₃(CF₃)₃, LiPF₃(iso-C₃F₇)₃, LiPF₅(iso-C₃F₇), LiPF₄(CF₃)₂, and LiPF₄(C₂F₅)₂, as well as LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂, and LiSCN, LiB(CN)₄, LiB(C₆H₅)₄, Li₂(C₂O₄), LiP(C₂O₄)₃, and Li₂B₁₂F_{b}H_{12-b} (wherein b is an integer of 0 to 3).

Preferred among these are LiTFSI, LiFSI, LiPF₆, LiBF4, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, and LiPF₃(C₂F₅)₃. Particularly preferred are LiTFSI, LiFSI, and LiPF₆.

One of these lithium salts may be used alone or two or more thereof may be used in any combination. In combination use of two or more thereof, preferred examples thereof include a combination of LiPF₆ and LiBF₄ and a combination of LiPF₆ and LiPO₂F₂, C₂H₅OSO₃Li, or FSO₃Li, each of which have an effect of improving the high-temperature storage characteristics, the load characteristics, and the cycle characteristics.

In another example, an inorganic lithium salt and an organic lithium salt are used in combination. Such a combination has an effect of reducing deterioration due to high-temperature storage. The organic lithium salt is preferably CF₃SO₃Li, LiN(FSO₂)₂, LiN (FSO₂)(CF₃SO₂), LiN(CF₃SO₂)₂, LiN(C₂F₅SO₂)₂, lithium cyclic 1,2-perfluoroethanedisulfonyl imide, lithium cyclic 1,3-perfluoropropanedisulfonyl imide, LiC(FSO₂)₃, LiC(CF₃SO₂)₃, LiC(C₂F₅SO₂)₃, LiBF₃CF₃, LiBF₃C₂F₅, LiPF₃(CF₃)₃, LiPF₃(C₂F₅)₃, or the like.

The amount of the metal salt in the electrochemical device mixture sheet of the first disclosure is preferably 0.1% by mass or more, more preferably 1% by mass or more, while preferably 30% by mass or less, more preferably 20% by mass or less, relative to the silicone compound.

The electrochemical device mixture sheet of the first disclosure may contain a conductive aid.

Non-limiting examples of the conductive aid include metal materials such as copper, nickel, and gold and carbon materials such as graphite, including natural graphite and artificial graphite, carbon black, including acetylene black, Ketjen black, channel black, furnace black, lamp black, and thermal black, and amorphous carbon, including needle coke, carbon nanotube, fullerene, and VGCF. One of these may be used alone or two or more thereof may be used in any combination at any ratio.

The amount of the conductive aid in the electrochemical device mixture sheet of the first disclosure is preferably 0.01% by mass or more, more preferably 0.1% by mass or more, still more preferably 1% by mass or more, while preferably 30% by mass or less, more preferably 15% by mass or less, still more preferably 5% by mass or less.

The electrochemical device mixture sheet of the first disclosure preferably has a thickness of 300 µm or smaller, more preferably 250 µm or smaller, still more preferably 200 µm or smaller, further preferably 180 µm or smaller, particularly preferably 150 µm or smaller, while preferably 10 µm or greater, more preferably 15 µm or greater, still more preferably 20 µm or greater.

The electrochemical device mixture sheet of the first disclosure can be used as an electrolyte mixture sheet or an electrode mixture sheet.

The second disclosure relates to an electrochemical device mixture sheet including: a silicone compound that is liquid at 25°C; a binder; and an electrochemical device material, the silicone compound having a polyoxyalkylene chain.

The electrochemical device mixture sheet of the second disclosure can give an effect similar to that of the electrochemical device mixture sheet of the first disclosure. Preferred embodiments described for the electrochemical device mixture sheet of the first disclosure are applicable to the electrochemical device mixture sheet of the second disclosure.

Hereafter, the electrochemical device mixture sheets of the first and second disclosures are collectively referred to as the electrochemical device mixture sheet of the disclosure.

### <Production method of electrochemical device mixture sheet>

The electrochemical device mixture sheet of the disclosure can be obtained by a production method including a step (1) of mixing a silicone compound that is liquid at 25°C, a binder, and an electrochemical device material to prepare an electrochemical device mixture, and a step (2) of rolling the electrochemical device mixture obtained in the step (1) into a sheet.

The disclosure also relates to the production method.

The production method of the disclosure can provide an electrochemical device mixture sheet in which the silicone compound is favorably dispersed inside the sheet. Owing to this, the silicone compound can more effectively impart fluidity to the electrochemical device material, further improving the sheet strength.

Normally, the electrochemical device mixture sheet obtained by the production method of the disclosure is not coated with the silicone compound.

The silicone compound, the binder, and the electrochemical device material used in the step (1) are the same as those described for the electrochemical device mixture sheet of the disclosure.

For the mixing condition in the step (1), the number of rotations is suitably set to 3000 rpm or less. The number of rotations is preferably 10 rpm or more, more preferably 15 rpm or more, still more preferably 20 rpm or more, while preferably 2000 rpm or less, more preferably 1500 rpm or less, still more preferably 1000 rpm or less. At the number of rotations below this range, mixing may take a long time, affecting productivity. At the number of rotations above this range, an excessive shear stress may be applied, possibly resulting in a mixture sheet having poor strength and poor flexibility.

In the step (1), the mixed materials may be molded into a bulky shape. Specific examples of methods of molding into a bulky shape include extrusion molding and press molding. The term "bulky" does not specify the shape and means any state of single mass, including a rod shape, a sheet shape, a spherical shape, a cubic shape, and the like.

A specific example of the rolling method in the step (2) is a method of rolling the bulky mixture using, for example, a roller press, a flat plate press, or a calender roller. The rolling temperature is preferably 100°C to 250°C.

The step (2) may be followed by a step (3) of applying a larger load to the resulting rolled sheet to form a thinner sheet-shaped product. The step (3) may be repeated. As described, better flexibility is achieved not by thinning the rolled sheet in one time but by rolling the sheet in steps. The number of performing the step (3) is preferably twice or more and 10 times or less, more preferably three times or more and nine times or less. A specific example of a rolling method is a method of rotating two or a plurality of rollers and passing the rolled sheet therebetween to provide a thinner sheet-shaped product.

The step (2) or the step (3) is also preferably followed by a step (4) of coarsely crushing the rolled sheet, again forming the coarsely crushed product into a bulky product, and then rolling the bulky product into a sheet-shaped product. Repeating the step (4) is also preferred. The number of performing the step (4) is preferably once or more and 12 times or less, more preferably twice or more and 11 times or less.

Specific examples of coarsely crushing the rolled sheet and again forming the coarsely crushed product into a bulky product in the step (4) include a method of folding the sheet, a method of forming the sheet into a rod- or a thin sheet-shaped product, and a method of forming the sheet into chips. The term "coarsely crushing" herein means changing the form of the rolled sheet obtained in the step (2) or step (3) into a different form so as to roll the product into a sheet-shaped product in the subsequent step, and encompasses simply folding the rolled sheet.

The step (4) may be followed by the step (3), or may be repeated. In any of the steps (2), (3), and (4), uniaxial stretching or biaxial stretching may be performed.

In the step (2), (3), and (4), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause, when the binder contains a fibrillatable resin, excessive fibrillation, resulting in a mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

### <Electrochemical device>

The disclosure also relates to an electrochemical device produced using the electrochemical device mixture sheet of the disclosure.

The electrochemical device of the disclosure may include the electrochemical device mixture sheet of the disclosure as an electrode mixture sheet or as an electrolyte mixture sheet. Alternatively, the electrochemical device of the disclosure may include the electrochemical device mixture sheets of the disclosure as an electrode mixture sheet and an electrolyte mixture sheet.

The electrochemical device of the disclosure preferably includes components such as a positive electrode and a negative electrode. Specifically, the electrochemical device of the disclosure is preferably a secondary battery including these components, particularly preferably a lithium-ion secondary battery including these components.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 µm or greater, preferably 3 µm or greater, more preferably 5 µm or greater, while usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 µm or greater, preferably 3 µm or greater, more preferably 5 µm or greater, while usually 1 mm or smaller, preferably 100 µm or smaller, more preferably 50 µm or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The density of the negative electrode mixture is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The secondary battery may be a secondary battery including an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The non-aqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

The aforementioned lithium salt can be used as the electrolyte salt.

The concentration of the electrolyte salt is preferably 0.8 mol/L or higher, more preferably 1.0 mol/L or higher. The upper limit is usually 1.5 mol/L or lower, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric formed from a material stable to the electrolyte solution, such as resin, glass fiber, or inorganic matter, and having an excellent liquid-retaining ability.

Examples of the material of a resin or glass-fiber separator include polyolefins such as polyethylene and polypropylene, aromatic polyamides, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 µm or greater, preferably 5 µm or greater, more preferably 8 µm or greater, while usually 50 µm or smaller, preferably 40 µm or smaller, more preferably 30 µm or smaller. The separator thinner than the above range may have poor insulation and poor mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 µm and a thickness of 5 to 50 µm. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 µm may be applied to the respective surfaces of the positive electrode with the fibrillatable resin used as a binder to form a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. In order to reduce weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin that is different from the resin of the laminate film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery preferably includes a positive electrode, a negative electrode, and a solid electrolyte layer between the positive electrode and the negative electrode.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is described with reference to examples, but the disclosure is not intended to be limited by these examples.

The following materials were used. Silicone compounds used were all liquid at 25°C. Also, silicone compounds were subjected to dehydration (placing a silicone compound in an evaporator and drying the silicone compound at 1.0 × 10² Pa for six hours with heating using an oil bath at 130°C) before use.

### <Silicone compounds>

Silicone compound A1: KF-96-100CS available from Shin-Etsu Chemical Co., Ltd. (kinematic viscosity at 25°C: 100 cSt, mass reduction rate after heating at 150°C for 24 hours: 6.0% by mass, polyoxyalkylene chain: not present, ion conductivity upon dissolution of 1% by mass of LiTFSI: 5.5 × 10⁻⁷ S/cm, saturated moisture content: 84 ppm, moisture content after drying: 43 ppm)

Silicone compound A2: KF-96L-2CS available from Shin-Etsu Chemical Co., Ltd. (kinematic viscosity at 25°C: 2 cSt, mass reduction rate after heating at 150°C for 24 hours: 99.9% by mass, polyoxyalkylene chain: not present, ion conductivity upon dissolution of 1% by mass of LiTFSI: 1.2 × 10⁻⁸ S/cm, saturated moisture content: 21 ppm, moisture content after drying: 11 ppm)

Silicone compound A3: KF-96L-5CS available from Shin-Etsu Chemical Co., Ltd. (kinematic viscosity at 25°C: 5 cSt, mass reduction rate after heating at 150°C for 24 hours: 99.9% by mass, polyoxyalkylene chain: not present, ion conductivity upon dissolution of 1% by mass of LiTFSI: 1.4 × 10⁻⁸ S/cm, saturated moisture content: 20 ppm, moisture content after drying: 11 ppm)

Silicone compound A4: KF-96H-60000CS available from Shin-Etsu Chemical Co., Ltd. (kinematic viscosity at 25°C: 60,000 cSt, mass reduction rate after heating at 150°C for 24 hours: 0.5% by mass, polyoxyalkylene chain: not present, ion conductivity upon dissolution of 1% by mass of LiTFSI: 7.4 × 10⁻⁹ S/cm, saturated moisture content: 101 ppm, moisture content after drying: 49 ppm)

Silicone compound A5: KF-96H-1000000CS available from Shin-Etsu Chemical Co., Ltd. (kinematic viscosity at 25°C: 1,000,000 cSt, mass reduction rate after heating at 150°C for 24 hours: 0.4% by mass, polyoxyalkylene chain: not present, ion conductivity upon dissolution of 1% by mass of LiTFSI: 4.8 × 10⁻⁹ S/cm, saturated moisture content: 147 ppm, moisture content after drying: 53 ppm)

Silicone compound A6: KF-96-20CS available from Shin-Etsu Chemical Co., Ltd. (kinematic viscosity at 25°C: 20 cSt, mass reduction rate after heating at 150°C for 24 hours: 12% by mass, polyoxyalkylene chain: not present, ion conductivity upon dissolution of 1% by mass of LiTFSI: 5.8 × 10⁻⁸ S/cm, saturated moisture content: 25 ppm, moisture content after drying: 14 ppm)

Silicone compound A7: KF-96-10CS available from Shin-Etsu Chemical Co., Ltd. (kinematic viscosity at 25°C: 10 cSt, mass reduction rate after heating at 150°C for 24 hours: 31% by mass, polyoxyalkylene chain: not present, ion conductivity upon dissolution of 1% by mass of LiTFSI: 5.1 × 10⁻⁸ S/cm, saturated moisture content: 20 ppm, moisture content after drying: 10 ppm)

Silicone compound B1: KF-643 available from Shin-Etsu Chemical Co., Ltd. (kinematic viscosity at 25°C: 19 cSt, mass reduction rate after heating at 150°C for 24 hours: 3.2% by mass, polyoxyalkylene chain: present, ion conductivity upon dissolution of 1% by mass of LiTFSI: 2.3 × 10⁻⁵ S/cm, saturated moisture content: infinite, moisture content after drying: 81 ppm)

### <Binder>

PTFE (produced in Production Example 1 below)
Poly(vinylidene fluoride-co-hexafluoropropylene) (produced in Production Example 2 below)
Poly(vinylidene fluoride-co-2,3,3,3-tetrafluoropropylene) (produced in Production Example 3 below)

### <Metal salt>

Lithium bis(trifluoromethane sulfonyl)imide (LiTFSI) available from Tokyo Chemical Industry Co., Ltd.

PTFE was produced and analyzed by the following methods.

### <Average primary particle size>

A PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

A PTFE aqueous dispersion in an amount of 1 g is dried in an air dryer at 150°C for 60 minutes, and the ratio of the mass of the heating residue to the mass (1 g) of the aqueous dispersion, expressed as a percentage, is used as the polymer solid concentration.

### <Standard specific gravity (SSG)>

The SSG was determined by the immersion method in conformity with ASTM D792 using a sample molded in conformity with ASTM D4895-89.

A white solid A was obtained by the method disclosed in Synthesis Example 1 of WO 2021/045228.

### (Production Example 1)

A 6-L stainless-steel autoclave equipped with a stirring blade and a temperature-controlling jacket was charged with 3480 g of deionized water, 100 g of paraffin wax, and 5.3 g of the white solid A. The inside of the autoclave was purged with nitrogen gas with warming to 70°C to remove oxygen. TFE was injected to set the pressure inside the autoclave to 0.78 MPaG and the temperature inside the autoclave was maintained at 70°C under stirring. Next, an aqueous solution prepared by dissolving 15.0 mg of ammonium persulfate in 20 g of water was injected with TFE, whereby a polymerization reaction was started. The pressure inside the autoclave dropped as the polymerization reaction progressed. TFE was thus added so that the temperature inside the autoclave was maintained at 70°C and the pressure inside the autoclave was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached about 1200 g from the start of the polymerization, stirring and feeding of TFE were stopped. Immediately thereafter, the gas inside the autoclave was released to normal pressure and the polymerization reaction was terminated. The resulting aqueous dispersion was taken out and cooled, and the paraffin wax was separated, whereby a PTFE aqueous dispersion was obtained. The average primary particle size of the resulting PTFE aqueous dispersion was 310 nm, and the solid content concentration was 25.3% by mass.

The PTFE aqueous dispersion obtained was diluted to a solid content concentration of 13% by mass. The PTFE was coagulated with stirring in the container, and water was filtered out, whereby a PTFE wet powder was obtained.

The resulting PTFE wet powder was dried at 180°C for 18 hours, whereby PTFE was obtained.

The SSG of PTFE obtained was 2.156.

### (Production Example 2)

A 3-L stainless-steel autoclave was charged with 1650 ml of pure water, purged with nitrogen, and slightly pressurized with hexafluoropropylene (HFP). The temperature of the autoclave was adjusted to 80°C with stirring at 380 rpm, and HFP was injected to 0.23 MPa. Moreover, a monomer mixture of vinylidene fluoride (VdF) and HFP in a molar ratio of 78.2/21.8 was injected to 1.472 MPa. 2-Methylbutane in an amount of 0.097 cc was injected with nitrogen and a solution of 36.4 g of ammonium persulfate in 80 ml of pure water was injected with nitrogen, whereby polymerization was started. When the pressure dropped to 1.44 MPa, the pressure was increased to 1.50 MPa using continuous monomers. This operation was repeated for about 9.3 hours, and after 607 g of continuous monomers had been fed, the gas inside the autoclave was discharged and the autoclave was cooled to recover 2299 g of dispersion. The dispersion had a solid content of 26.9% by weight. Magnesium chloride was added to this dispersion to cause coagulation, followed by drying, whereby 610 g of polymer was obtained. The obtained polymer contained HFP and VdF in a molar ratio of 22.1/77.9. The obtained polymer had a Mooney viscosity (ML 1 + 10 (121°C)) of 140 and the Tg thereof was determined to be -18°C by DSC. The heat of fusion was not observed in the second run.

### (Production Example 3)

A 3-L stainless-steel autoclave was charged with 1500 ml of pure water, 0.3001 g of a 50% aqueous solution of CE₂=CFCF₂OCF(CF₃)CF₂OCF(CF₃)COONH₄, and 6.001 g of a 50% aqueous solution of C₅F₁₁COONH₄, purged with nitrogen, and slightly pressurized with vinylidene fluoride (VdF). The temperature of the autoclave was adjusted to 80°C with stirring at 600 rpm, and VdF was injected to 1.22 MPa. Moreover, a monomer mixture of VdF and 2,3,3,3-tetrafuloropropene in a molar ratio of 77.2/22.8 was injected to 1.501 MPa. A solution of 0.1 g of ammonium persulfate in 4 ml of pure water was injected with nitrogen, whereby polymerization was started. When the amount of continuous monomers reached 11 g, 1.6738 g of 1,1,1,2,3,3,3-heptafluoro-2-iodo-propane was added. When the pressure dropped to 1.44 MPa, the pressure was increased to 1.50 MPa using the continuous monomers. This operation was repeated for about 6.2 hours, and after 521 g of continuous monomers had been fed, the gas inside the autoclave was discharged and the autoclave was cooled to recover 2087 g of dispersion. The dispersion had a solid content of 26.08% by weight. Calcium chloride was added to this dispersion to cause coagulation, followed by drying, whereby 524.3 g of polymer was obtained. The obtained polymer contained 2,3,3,3-tetrafluoropropene and VdF in a molar ratio of 23.1/76.9. The obtained polymer had a Mooney viscosity (ML 1 + 10 (121°C)) of 25 and the Tg thereof was determined to be -14°C by DSC.

By the following procedures, mixture sheets of experiment examples were produced, and evaluations of mixture sheets and batteries were performed.

### (Production of positive electrode mixture sheet)

The active material (Experiment Examples 1 to 23: LiNi_{0.8}Mn_{0.1}Co_{0.1}O₂, Experiment Example 24: LiFePO₄, Experiment Example 25: LiCoO₂) and the conductive aid (SuperP Li: carbon black available from Imerys S.A.) were weighed out, and they were fed into a V-type mixer, followed by mixing at 37 rpm for 10 minutes, whereby a mixture containing the active material and the conductive aid was obtained.

Next, the mixture and a silicone compound were fed into a high-speed fluidized bed mixer and processed at 200 rpm for one minute to disperse the mixture. In Experiment Examples 18 to 25, a metal salt was preliminarily dissolved in the silicone compound before use.

Then, a binder (Experiment Examples 1 to 21, 24, and 25: PTFE, Experiment Example 22: PTFE and poly(vinylidene fluoride-co-hexafluoropropylene), Experiment Example 23: PTFE and poly(Vinylidene fluoridie-co-2,3,3,3-tetrafluoropropylene)) weighed out was fed to the mixture and sufficiently cooled in a thermostatic bath at 5°C. The mixture containing the active material, the conductive aid, the binder, and the silicone compound or the mixture containing the active material, the conductive aid, the binder, the silicone compound, and the metal salt was fed into a high-speed fluidized bed mixer and processed at 1500 rpm for three minutes to homogenize the mixture. The composition ratio (mass ratio) of the active material and the conductive aid was fixed to (active material): (conductive aid) = 98.0:2.0. The amount of the binder relative to the total amount of the active material, the conductive aid, and the binder was as shown in Table 1 or 2.

Then, the mixture was thoroughly heated in a thermostatic bath at 80°C, and processed in a high-speed fluidized bed mixer at 2500 rpm for eight minutes so that fibrillation was promoted, whereby an electrode mixture was obtained.

The electrode mixture was fed to a rolling machine including parallel metal rolls capable of rotating at different peripheral speeds (temperature: 60°C, rotation speed of the left roll: 1 m/min, rotation speed of the right roll: 0.8 m/min), whereby an electrode mixture sheet was obtained.

The resulting mixture sheet was again fed to the rolling machine and rolled, whereby an electrode mixture sheet with higher strength was obtained. Every mixture sheet obtained was a self-supporting film.

The electrode mixture sheet was then fed to a roll press machine to adjust the gap. The thickness of the positive electrode mixture layer was finally adjusted to 80 µm.

The amounts of the silicone compound, the binder, and the metal salt are shown in Tables 1 and 2. The amount of the silicone compound is the amount relative to the solid content (including the active material, the conductive aid, and the binder) of the electrode mixture sheet and was determined as follows. The pulverized electrode mixture sheet in an amount of 500 mg was placed in a vial, 10 mL of a solution with a volume ratio of hexane:acetone = 1:1 was added thereto, and the mixture was stirred for 24 hours, whereby an extract was obtained. The extract was filtered through a membrane filter (pore diameter: 0.1 µm) and the amount of the silicone compound present in the resulting filtrate was measured. The amount of the binder is the amount relative to the solid content of the electrode mixture sheet, and the amount of the metal salt is the amount relative to the silicone compound. They are both the amounts added.

### (Measurement of strength of positive electrode mixture sheet)

The positive electrode mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 40 mm. A displacement was applied to the test piece until breaking, and the maximum stress of the measured results was taken as the strength of each sample. Evaluation was performed in accordance with the following criteria with the strength in Experiment Example 1 set to 100.
10: 150 or more
9: 140 or more but less than 150
8: 130 or more but less than 140
7: 120 or more but less than 130
6: 115 or more but less than 120
5: 110 or more but less than 115
4: 105 or more but less than 110
3: 100 or more but less than 105
2: 95 or more but less than 100
1: Less than 95

### (Production of positive electrode)

The positive electrode mixture sheet was bonded to 20-µm aluminum foil in the following manner.

The adhesive used was a slurry prepared by dissolving polyvinylidene fluoride (PVDF) in N-methylpyrrolidone (NMP) and dispersing carbon black therein at a ratio of 80:20. The above adhesive was applied to aluminum foil and dried on an electric griddle at 120°C for 15 minutes, whereby a current collector with an adhesive layer was formed.

After that, the positive electrode mixture sheet was placed on the current collector with an adhesive layer, and the positive electrode mixture sheet and the current collector were bonded to each other using a roll press machine heated to 100°C. The workpiece was cut into the desired size, followed by tab attachment, whereby a positive electrode was obtained.

### (Production of negative electrode)

First, 98 parts by mass of a carbonaceous material (graphite) was mixed with 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-µm-thick copper foil and dried. The workpiece was rolled using a press machine and cut to provide a piece in a desired size, followed by tab attachment. This piece was used as a negative electrode.

### (Preparation of electrolyte solution)

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A LiPF₆ salt was mixed with this mixed solution at 23°C so that the concentration thereof in the electrolyte solution was 1.1 mol/L.

### (Production of aluminum laminate cell)

The positive electrode and the negative electrode were placed to face each other with a 20-µm-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

### <Battery evaluation>

The lithium-ion secondary battery produced above was subjected to constant current/constant voltage charge (hereinafter, referred to as CC/CV charge) (0.1 C cut off) to 4.25 V at a current corresponding to 0.33 C at 45°C, and then discharged to 3 V at a constant current of 0.33 C. This was counted as one cycle, and the discharge capacity at the third cycle was used to determine the initial discharge capacity. Using the following equation, the discharge capacity characteristics (mass discharge capacity characteristics) per unit mass of the active material was determined.

### • Calculation formula

Mass discharge capacity characteristics (mAh/g) = Initial discharge capacity (mAh)/Mass (g) of active material in positive electrode mixture

The determined mass discharge capacity characteristics were ranked by relative evaluation. Evaluation was performed in accordance with the following criteria with the characteristics in Experiment Example 1 set to 100.
7: 120 or more
6: 115 or more but less than 120
5: 110 or more but less than 115
4: 105 or more but less than 110
3: 100 or more but less than 105
2: 95 or more but less than 100
1: Less than 95

**[Table 1]**

| | Silicone compound | | | | | Binder | Metal salt | Evaluation | |
|---|---|---|---|---|---|---|---|---|---|
| Experiment Example | Type | Amount /% by mass | Viscosity at 25°C/cSt | Saturated moisture content /ppm | Mass reduction rate at 150°C for 24 h/% by mass | Amount /% by mass | Amount/% by mass | Sheet strength | Mass discharge capacity characteristics |
| 1 | A1 | 0.3 | 100 | 84 | 6.0 | 0.5 | | - | - |
| 2 | A1 | 0.5 | 100 | 84 | 6.0 | 0.5 | | 4 | 4 |
| 3 | A1 | 13.2 | 100 | 84 | 6.0 | 0.5 | | 5 | 4 |
| 4 | A1 | 24.6 | 100 | 84 | 6.0 | 0.5 | | 1 | 1 |
| 5 | A2 | 0.5 | 2 | 21 | 99.9 | 0.7 | | 3 | 3 |
| 6 | A3 | 0.5 | 5 | 20 | 99.9 | 0.7 | | 4 | 4 |
| 7 | A4 | 0.5 | 60000 | 101 | 0.5 | 0.7 | | 4 | 4 |
| 8 | A5 | 0.5 | 1000000 | 147 | 0.4 | 0.7 | | 3 | 2 |
| 9 | A6 | 1.4 | 20 | 25 | 12 | 2.1 | | 6 | 4 |
| 10 | A1 | 1.4 | 100 | 84 | 6.0 | 2.1 | | 6 | 5 |
| 11 | A1 | 8.1 | 100 | 84 | 6.0 | 4.7 | | 7 | 4 |
| 12 | B1 | 8.1 | 19 | Infinite | 3.2 | 4.7 | | 7 | 5 |
| 13 | A7 | 10.5 | 10 | 20 | 31 | 1 | | 5 | 4 |
| 14 | A4 | 10.5 | 60000 | 101 | 0.5 | 1 | | 6 | 5 |
| 15 | B1 | 1.2 | 19 | Infinite | 3.2 | 0.1 | 200 | 4 | 4 |
| 16 | B1 | 1.2 | 19 | Infinite | 3.2 | 7 | | 7 | 5 |
| 17 | B1 | 1.2 | 19 | Infinite | 3.2 | 15 | | 10 | 4 |
| 18 | B1 | 1 | 19 | Infinite | 3.2 | 1 | 1 | 4 | 6 |
| 19 | B1 | 8.2 | 19 | Infinite | 3.2 | 1 | 10 | 6 | 7 |
| 20 | B1 | 9 | 19 | Infinite | 3.2 | 2 | 10 | 9 | 7 |
| 21 | A1 | 18.0 | 100 | 84 | 6.0 | 0.5 | | 4 | 4 |

**[Table 2]**

| | Active material | Silicone compound | | | | | Binder | | | Metal salt | Evaluation | |
|---|---|---|---|---|---|---|---|---|---|---|---|---|
| Experiment Example | Type | Type | Amount /% by mass | Viscosity at 25° C/cSt | Saturated moisture content /ppm | Mass reduction rate at 150° C for 24 h/% by mass | Type | Amount /% by mass | PTFE content in binder/% by mass | Amount/% by mass | Sheet strength | Mass discharge capacity characteristics |
| 22 | LiNi_{0.8}Mn_{0.1}Co_{0.1}O₂ | B1 | 9 | 19 | Infinite | 3.2 | PTFE and poly(vinylidene fluoride-co-hexafluoropropylene) | 2 | 90 | 10 | 9 | 7 |
| 23 | LiNi_{0.8}Mn_{0.1}Co_{0.1}O₂ | B1 | 9 | 19 | Infinite | 3.2 | PTFE and poly(vinylidene fluoride-co-2,3,3,3-tetrafluoropropylene) | 2 | 90 | 10 | 9 | 7 |
| 24 | LiFePO₄ | B1 | 9 | 19 | Infinite | 3.2 | PTFE | 2 | 100 | 10 | 9 | 4 |
| 25 | LiCoO₂ | B1 | 9 | 19 | Infinite | 3.2 | PTFE | 2 | 100 | 10 | 9 | 4 |

### (Production of positive electrode mixture sheet for solid-state battery)

The active material (LiNi_{0.8}Mn_{0.1}Co_{0.1}O₂), the conductive aid (SuperP Li: carbon black available from Imerys S.A.), the solid electrolyte (Li₆PS₅Cl: available from Sigma-Aldrich), and the silicone compound A1 were weighed out, fed into a high-speed fluidized bed mixer, and processed at 200 rpm for one minute, whereby a mixture containing the active material, the conductive aid, the solid electrolyte, and the silicone compound was obtained.

Then, the binder (fibrillatable resin: PTFE powder) weighed out was added to the mixture and the mixture was allowed to cool sufficiently in a thermostatic bath at 5°C. The mixture containing the active material, the conductive aid, the solid electrolyte, the binder, and the silicone compound was fed into a high-speed fluidized bed mixer and processed at 1500 rpm for three minutes to homogenize the mixture. The composition ratio (mass ratio) of the active material, the conductive aid, the binder, and the solid electrolyte was set to (active material): (conductive aid):(binder): (solid electrolyte): (silicone compound A1) = 66.5:2:1.5:30:3.

Then, the mixture was thoroughly heated in a thermostatic bath at 80°C, and processed in a high-speed fluidized bed mixer at 2500 rpm for eight minutes so that fibrillation was promoted, whereby an electrode mixture was obtained.

The electrode mixture was fed to a rolling machine including parallel metal rolls capable of rotating at different peripheral speeds (temperature: 60°C, rotation speed of the left roll: 1 m/min, rotation speed of the right roll: 0.8 m/min), whereby a positive electrode mixture sheet was obtained.

The resulting positive electrode mixture sheet was again fed to the rolling machine and rolled, whereby a positive electrode mixture sheet with higher strength was obtained.

The positive electrode mixture sheet was then fed to a roll press machine to adjust the gap. The thickness of the positive electrode mixture layer was finally adjusted to 85 µm.

The obtained positive electrode mixture sheet was a self-supporting film.

### (Production of solid electrolyte mixture sheet for solid- state battery: Experiment Example 26)

The solid electrolyte (Li₆PS₅Cl: available from Sigma-Aldrich) and the silicone compound A1 were weighed out, fed into a high-speed fluidized bed mixer, and processed at 200 rpm for one minute, whereby a mixture containing the solid electrolyte and the silicone compound was obtained.

Then, the binder (fibrillatable resin: PTFE powder) weighed out was added to the mixture and the mixture was allowed to cool sufficiently in a thermostatic bath at 5°C. The mixture containing the binder, the solid electrolyte, and the silicone compound was fed into a high-speed fluidized bed mixer and processed at 1500 rpm for three minutes to homogenize the mixture. The composition ratio (mass ratio) of the binder, the solid electrolyte, and the silicone compound was set to (binder): (solid electrolyte): (silicone compound) = 1.5:98.5:3.

Then, the mixture was thoroughly heated in a thermostatic bath at 80°C, and processed in a high-speed fluidized bed mixer at 2500 rpm for eight minutes so that fibrillation was promoted, whereby a solid electrolyte mixture was obtained.

The solid electrolyte mixture was fed to a rolling machine including parallel metal rolls capable of rotating at different peripheral speeds (temperature: 60°C, rotation speed of the left roll: 1 m/min, rotation speed of the right roll: 0.8 m/min), whereby a solid electrolyte mixture sheet was obtained.

The resulting solid electrolyte mixture sheet was again fed to the rolling machine and rolled, whereby a solid electrolyte mixture sheet with higher strength was obtained.

The solid electrolyte mixture sheet was then fed into a roll press machine to adjust the gap. The thickness of the solid electrolyte mixture layer was finally adjusted to 45 µm.

The obtained solid electrolyte mixture sheet was a self-supporting film.

### (Production of solid-state battery)

After the produced positive electrode and solid electrolyte layer were subjected to punching, the resulting positive electrode and lithium foil serving as a negative electrode were placed facing each other and stacked with the solid electrolyte layer in between, followed by pressing for integration, whereby a solid-state battery was produced.

### (Production of solid electrolyte mixture sheet for solid-state battery by application: Experiment Example 27)

The solid electrolyte (Li₆PS₅Cl: available from Sigma-Aldrich) and the silicone compound A1 were weighed out, fed into a high-speed fluidized bed mixer, and processed at 200 rpm for one minute, whereby a mixture containing the solid electrolyte and the silicone compound was obtained.

Separately, the binder obtained in Production Example 3 was dissolved in butyl butyrate to prepare a binder solution (5% by weight). The binder solution was added to the mixture, followed by mixing using a planetary centrifugal mixer at 2000 rpm for two minutes, whereby a solid electrolyte slurry composition was obtained. The composition ratio (mass ratio) of the binder, the solid electrolyte, and the silicone compound was set to (binder):(solid electrolyte): (silicone compound) = 30:70:3.

The obtained solid electrolyte slurry composition was applied to a PET film using a doctor blade (gap: 80 µm), dried in a drying furnace at 100°C for 12 hours, and fed to a roll press machine. The gap was adjusted to set the final thickness of the solid electrolyte layer to 50 µm. Then, the solid electrolyte layer was peeled from the PET film, whereby a self-supporting solid electrolyte mixture sheet was obtained.

### (Production of solid-state battery)

After the produced positive electrode and solid electrolyte layer were subjected to punching, the resulting positive electrode and lithium foil serving as a negative electrode were placed facing each other and stacked with the solid electrolyte layer in between, followed by pressing for integration, whereby a solid-state battery was produced.

### (Measurement of strength of solid electrolyte mixture sheet)

The solid electrolyte mixture sheet was cut, whereby a strip-shaped test piece with a width of 4 mm was produced. A tensile tester (AGS-100NX, available from Shimadzu Corp.) was used to determine the strength of the test piece under the condition of 100 mm/min. The chuck distance was set to 40 mm. A displacement was applied to the test piece until breaking, and the maximum stress of the measured results was taken as the strength of each sample. Evaluation was performed in accordance with the following criteria with the strength in Experiment Example 1 set to 100. The results are shown in Table 3.
10: 150 or more
9: 140 or more but less than 150
8: 130 or more but less than 140
7: 120 or more but less than 130
6: 115 or more but less than 120
5: 110 or more but less than 115
4: 105 or more but less than 110
3: 100 or more but less than 105
2: 95 or more but less than 100
1: Less than 95

### <Battery evaluation>

The solid-state battery produced above was subjected to constant current/constant voltage charge (hereinafter, referred to as CC/CV charge) (0.1 C cut off) to 4.25 V at a current corresponding to 0.33 C at 45°C, and then discharged to 3 V at a constant current of 0.33 C. This was counted as one cycle, and the discharge capacity at the third cycle was used to determine the initial discharge capacity. Using the following equation, the discharge capacity characteristics (mass discharge capacity characteristics) per unit mass of the active material was determined.

### • Calculation formula

Mass discharge capacity characteristics (mAh/g) = Initial discharge capacity (mAh)/Mass (g) of active material in positive electrode mixture

The determined mass discharge capacity characteristics were ranked by relative evaluation. Evaluation was performed in accordance with the following criteria with the strength in Experiment Example 1 set to 100. The results are shown in Table 3.
7: 120 or more
6: 115 or more but less than 120
5: 110 or more but less than 115
4: 105 or more but less than 110
3: 100 or more but less than 105
2: 95 or more but less than 100
1: Less than 95

**[Table 3]**

| | Silicone compound | | Binder | | Evaluation | |
|---|---|---|---|---|---|---|
| Experiment Example | Type | Amount/% by mass | Type | Amount/% by mass | Sheet strength | Mass discharge capacity characteristics |
| 26 | A1 | 3.0 | PTFE | 1.5 | 5 | 5 |
| 27 | A1 | 3.0 | Poly(vinylidene fluoride-co-2,3,3,3-tetrafluoropropylene) | 30 | 10 | 4 |

## Claims

1. An electrochemical device mixture sheet comprising:
a silicone compound that is liquid at 25°C;
a binder; and
an electrochemical device material,
the silicone compound being contained in an amount of 0.5 to 20% by mass relative to a solid content of the electrochemical device mixture sheet,
the silicone compound having a kinematic viscosity at 25°C of 5 cSt to 60000 cSt.

2. The electrochemical device mixture sheet according to claim 1,
wherein the silicone compound has a polyoxyalkylene chain.

3. The electrochemical device mixture sheet according to claim 1 or 2,
wherein the silicone compound is contained in an amount of 0.5 to 15% by mass relative to the solid content of the electrochemical device mixture sheet.

4. An electrochemical device mixture sheet comprising:
a silicone compound that is liquid at 25°C;
a binder; and
an electrochemical device material,
the silicone compound having a polyoxyalkylene chain.

5. The electrochemical device mixture sheet according to any one of claims 1 to 4,
wherein the silicone compound has a saturated moisture content at 25°C of greater than 30 ppm.

6. The electrochemical device mixture sheet according to any one of claims 1 to 5,
wherein the silicone compound has a mass reduction rate of 20% by mass or less when heated at 150°C for 24 hours.

7. The electrochemical device mixture sheet according to any one of claims 1 to 6,
wherein the binder is contained in an amount of 0.5 to 10% by mass relative to the solid content of the electrochemical device mixture sheet.

8. The electrochemical device mixture sheet according to any one of claims 1 to 7, comprising a metal salt.

9. The electrochemical device mixture sheet according to claim 8,
wherein the metal salt is contained in an amount of 0.1 to 30% by mass relative to the silicone compound.

10. The electrochemical device mixture sheet according to any one of claims 1 to 9,
wherein the electrochemical device mixture sheet is an electrode mixture sheet or an electrolyte mixture sheet.

11. The electrochemical device mixture sheet according to any one of claims 1 to 10,
wherein the binder is a fluorine polymer material.

12. The electrochemical device mixture sheet according to claim 11,
wherein the binder includes at least one selected from the group consisting of polytetrafluoroethylene, poly(vinylidene fluoride-co-hexafluoropropylene), and poly(vinylidene fluoride-co-2,3,3,3-tetrafluoropropylene).

13. The electrochemical device mixture sheet according to claim 12,
wherein the binder includes polytetrafluoroethylene.

14. The electrochemical device mixture sheet according to any one of claims 1 to 13, comprising a conductive aid.

15. An electrochemical device comprising the electrochemical device mixture sheet according to any one of claims 1 to 14.

16. A method for producing an electrochemical device mixture sheet, the method comprising:
a step (1) of mixing a silicone compound that is liquid at 25°C, a binder, and an electrochemical device material to prepare an electrochemical device mixture; and
a step (2) of rolling the electrochemical device mixture obtained in the step (1) into a sheet.

17. The production method according to claim 16,
wherein the silicone compound has a kinematic viscosity at 25°C of 5 cSt to 60000 cSt,
the silicone compound has a polyoxyalkylene chain, and
the binder includes polytetrafluoroethylene.
